# EUROPÄISCHE PATENTSCHRIFT

(11) **EP 2 115 415 B1**
(45) Veröffentlichungstag und Bekanntmachung des Hinweises auf die Patenterteilung: **14.03.2012**
(21) Anmeldenummer: 08701359.5
(22) Anmeldetag: 09.01.2008
(51) Int. Cl.: G01L 19/00, G01P 1/00

(54) **LUFTDRUCKSENSOR**
AIR-PRESSURE SENSOR
CAPTEUR D'AIR COMPRIME

(30) Priorität: 28.02.2007 DE 102007009697
(43) Veröffentlichungstag der Anmeldung: 11.11.2009
(73) Patentinhaber: Robert Bosch GmbH, 70442 Stuttgart (DE)
(72) Erfinder: HENZLER, Stephan, 72810 Gomaringen (DE); BRANDT, Tobby, 71034 Boeblingen (DE); OHL, Christian, 72793 Pfullingen (DE); ADAM, Boris, 71126 Gaeufelden (DE); SCHUERER, Martin, 72631 Aichtal (DE)
(86) Internationale Anmeldenummer: PCT/EP2008/050195
(87) Internationale Veröffentlichungsnummer: WO 2008/104414

(56) Entgegenhaltungen:
- EP-A- 1 114 757
- WO-A-00/71978
- DE-A1- 19 737 821

## Beschreibung

### Stand der Technik

Die Erfindung betrifft einen Luftdrucksensor nach der Gattung des unabhängigen Patentanspruchs.

Aus DE 199 23 985 A1 ist eine Sensorbaugruppe bekannt, bei der das Gehäuse eines Luftdrucksensors, der zur Seitenaufprallsensierung verwendet wird, über Befestigungsmittel, beispielsweise Schrauben, an einer Wand im Fahrzeug befestigt wird. Auch DE 191 06 311 A1 lehrt, dass ein Luftdrucksensor in der Wand an einer Trennwand zwischen Nassraum und Trockenraum in der Tür eingebaut wird. Dabei ragt ein Druckkanal in den Nassraum hinein, während der Luftdrucksensor sich selbst im Trockenraum befindet. Es ist ein Dichtkissen vorgesehen, das das Gehäuseinnere gegen den Drucksensor abdichtet und auch das Gehäuse gegen die Trennwand.

Aus DE 197 37 821 A1 ist eine Anordnung zum Anbringen eines Sensors an einem Sensoranbringungsbauteil bekannt. Bei dem Sensor kann es sich um einen Drucksensor handeln, der einen sensorhervorstehenden Abschnitt aufweist, der im Wesentlichen eine zylindrische Form mit einer Druckführungsöffnung aufweist. Der sensorhervorstehende Abschnitt wird durch eine Öffnung innerhalb des Sensoranbringungsbauteils geführt, wodurch sich ein den sensorhervorstehenden Abschnitt umgebendes elastisches Element mit dem Sensoranbringungsbauteil verhakt. Zusätzlich weist das elastische Element einen Fortsatz auf, der in eine weitere Öffnung des Sensoranbringungsbauteils eingreift, wenn der Sensor an dem Sensoranbringungsbauteil befestigt ist.

### Offenbarung der Erfindung

Der erfindungsgemäße Luftdrucksensor zur Seitenaufprallsensierung mit den Merkmalen des unabhängigen Patentanspruchs hat demgegenüber den Vorteil, dass nunmehr nur noch ein einziges Verbindungselement notwendig ist, um den Luftdrucksensor an der Fahrzeugwand zu befestigen. Durch die Struktur, die sich am Druckeinlasskanal befindet, ist der zweite Befestigungspunkt in einfacher Art und Weise realisiert. Damit ermöglicht der erfindungsgemäße Luftdrucksensor eine Einhandmontage, da der Luftdrucksensor zunächst mittels der wenigstens einen Struktur eingehakt wird und dann durch Andrücken an die Fahrzeugwand mit dem Verbindungselement befestigt werden kann. Diese Montage ist erheblich einfacher als aus dem Stand der Technik bekannt. Insbesondere ermöglicht der Luftdrucksensor eine erhebliche Kosteneinsparung, da das zweite Verbindungselement entfällt.

Der Luftdrucksensor ist üblicherweise mit einem mikromechanischen Element versehen, einer Membranstruktur, die es ermöglicht, einen Luftdruck zuverlässig zu messen. Der Luftdrucksensor weist selbst eine Messwertaufbereitung und gegebenenfalls auch einen Senderbaustein auf, der es ermöglicht, die Luftdrucksensordaten zu einem Steuergerät zur Ansteuerung von Personenschutzmitteln zu übertragen. Im Luftdrucksensor kann auch eine Elektronik vorgesehen sein, die eine einfache Umformung des Luftdrucksensorsignals ermöglicht, beispielsweise den Bezug auf einen Normdruck. Ein solcher Luftdrucksensor hat sich als zuverlässiger und schneller Sensor für eine Seitenaufprallsensierung gezeigt. Dabei wird der Luftdruckanstieg im Nassraum durch die Verformung des Fahrzeugseitenteils gemessen.

Das Loch, das ist der Durchbruch, welches zur Befestigung des Verbindungselements verwendet wird, kann üblicherweise eine kreisförmige Bohrung im Luftdrucksensor sein. Es sind jedoch auch andere Durchbrüche möglich, die elliptische oder eckige Formen aufweisen.

Das Verbindungselement hat die Funktion, den Luftdrucksensor letztlich zu befestigen und zwar in einer solchen Art und Weise, dass sich der Luftdrucksensor infolge normaler Belastungen nicht mehr löst.

Die Fahrzeugwand ist üblicherweise ein Türblech, das den Nassraum vom Trockenraum in dem Fahrzeugseitenteil trennt.

Die Struktur ist so geformt, dass ein Einhaken des Luftdrucksensors an der Fahrzeugwand als erster Arbeitsschritt bei der Befestigung des Luftdrucksensors möglich ist. Im zweiten Arbeitsschritt wird dann der Luftdrucksensor gegen die Fahrzeugwand gedrückt, eventuell unter Beihaltung des Anpressdrucks in die Endposition gebracht und dann mit dem Verbindungselement befestigt. Die Struktur befindet sich am Druckeinlasskanal, also einer Art Nase, die in den Nassraum führt und die Luftdruckschwankungen an das Druckmesselement weitergeben soll. Die Öffnung in der Fahrzeugwand kann kreisförmig sein, aber auch jede andere Form aufweisen.

Durch die in den abhängigen Ansprüchen aufgeführten Maßnahmen und Weiterbildungen sind vorteilhafte Verbesserungen des im unabhängigen Patentanspruch angegebenen Luftdrucksensors möglich.

Besonders vorteilhaft ist, dass das Verbindungselement als eine Schraube, eine Niete, ein Clips oder ein Dübel ausgeführt ist. Schrauben und Nieten sind sehr zuverlässige Verbindungselemente, während Clipse ebenfalls zuverlässig sind, aber auch eine einfache Handhabung ermöglichen. Auch ein Dübel ist ein sehr zuverlässiges Element, das einfach montiert werden kann.

Vorteilhafterweise realisiert der Druckeinlasskanal die wenigstens eine Struktur durch wenigstens eine Abwinkelung. Diese Abwinkelung kann 90 Grad sein, aber auch jeden anderen geeigneten Winkel, vorzugsweise zwischen 90 und 0 Grad, aufweisen.

Der Druckeinlasskanal kann aber auch zur Realisierung der wenigstens einen Struktur wenigstens einen Vorsprung aufweisen. Dieser Vorsprung hat dann beispielsweise die Form einer Nase oder eines Stiftes oder mehrerer Stifte oder eines Schirms und ermöglicht das Einhaken des erfindungsgemäßen Luftdrucksensors.

Vorzugsweise ist das Verbindungselement auf einer Seite des Luftdrucksensors und auf der gegenüberliegenden Seite die Struktur. Dies ist für die Kraftverteilung optimal. Insbesondere ist dabei die Struktur im eingebauten Zustand am oberen Teil des Luftdrucksensors und am unteren Teil das Verbindungselement.

Vorteilhafterweise ist das Verbindungselement derart geformt, dass es ein elektrisches Kontaktieren des Luftdrucksensors erst freigibt, wenn der Luftdrucksensor fertig montiert ist, also das Verbindungselement seine Befestigungsposition erreicht hat. Dabei kann beispielsweise der Kopf des Verbindungselements ein Kontaktieren des Luftdrucksensors solange verhindern, bis das Verbindungselement fertig montiert ist.

Die Öffnungen, die in der Fahrzeugwand vorgesehen sind, müssen abgedichtet werden. Dies wird vorliegend trockenraumseitig durchgeführt. Dafür wird auch eine Dichtung verwendet, die durch die Kraft, die die Struktur aufnimmt, belastet wird. Vorzugsweise wird diese Dichtung oberhalb der Öffnung in der Wand im befestigten Zustand angeordnet, um so nicht durch Wasser oder andere Flüssigkeiten zusätzlich beeinträchtigt zu werden. Dies erhöht die Zuverlässigkeit der erfindungsgemäßen Befestigung.

Ausführungsbeispiele der Erfindung sind in der Zeichnung dargestellt und werden in der nachfolgenden Beschreibung näher erläutert.

Es zeigen:
- Figur 1: eine erste Seitenansicht des erfindungsgemäßen Luftdrucksensors,
- Figur 2: eine zweite Seitenansicht,
- Figur 3: einen Clips als Verbindungselement und
- Figur 4: eine Alternative zur 90-Grad-Abwinkelung des Druckeinlasskanals.

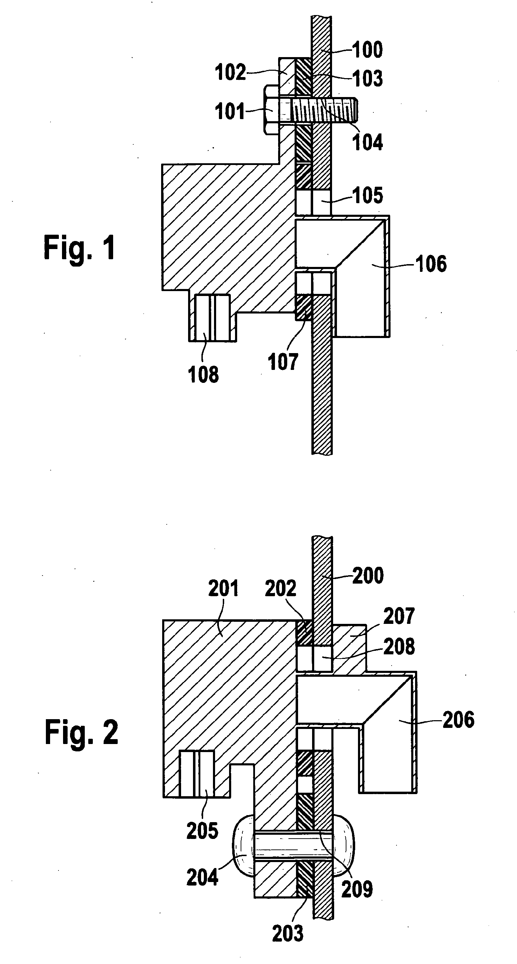

Figur 1 erläutert in einer ersten Seitenansicht den erfindungsgemäßen Luftdrucksensor. Die Fahrzeugwand ist hier ausgefüllt dargestellt und mit dem Bezugszeichen 100 gekennzeichnet. Vorliegend ist als Verbindungselement eine Schraube 101 in einer Bohrung des Luftdrucksensors vorgesehen, die durch eine Öffnung 104 in der Wand 100 hindurchgeführt wird. Die Schraube 101 hält den Luftdrucksensor 102 und die Dichtung 103 an der Wand 100. Der Einfachheit halber wurde eine notwendige Mutter vorliegend nicht dargestellt. Durch eine große Öffnung 105 in der Fahrzeugwand 100 wurde der Druckeinlasskanal 106 hindurchgeführt, und er ist um 90 Grad abgewinkelt und die Abwinkelung ist so lang, dass sie ein Einhaken des Drucksensors 102 an der Wand 100 ermöglicht. Damit kann dann in einem zweiten Arbeitsschritt die Schraube 101 in der Wand befestigt werden. Auch die Öffnung 105 muss durch eine zusätzliche Dichtung 107 abgedichtet werden.

Ein Stecker 108 ist für die Aufnahme von einer elektrischen Verbindung vorgesehen. Der Druckeinlasskanal ragt mit seiner Öffnung nach unten, sodass sich kein Wasser im Druckeinlasskanal oder zumindest nur in geringen Mengen ablagert.

Es ist alternativ möglich, dass die Schraube 101 unter den Druckeinlasskanal durch eine Öffnung geführt wird und so die Befestigung stattfindet. Um dies jedoch zu optimieren, ist dann die wenigstens eine Struktur nicht der Druckeinlasskanal, sondern ein Vorsprung, der dann ein Einhaken oberhalb der Öffnung 105 ermöglicht.

Dies ist in Figur 2 dargestellt. Hier ist an der Wand 200 durch eine Öffnung 208 der Druckeinlasskanal 206 hindurchgeführt, der nunmehr auch einen Vorsprung 207 aufweist, der ein Einhaken an der Wand 200 ermöglicht. Der Luftdrucksensor 201 weist durch eine Bohrung eine Niete 204 auf, die durch die Öffnung 209 geführt wurde. Die Niete 204 ist vorliegend das Verbindungselement. Die Öffnung 209 wird durch die Dichtung 203 und die Öffnung 208 zusätzlich durch die Dichtung 202 abgedichtet. Der elektrische Stecker 205 wird durch die Niete 204 erst dann zum Anschluss freigegeben, wenn die Niete 204 seine Einbauposition, also Endposition, erreicht hat.

Der Vorsprung 207 kann in unterschiedlichen Arten und Weisen geformt sein.

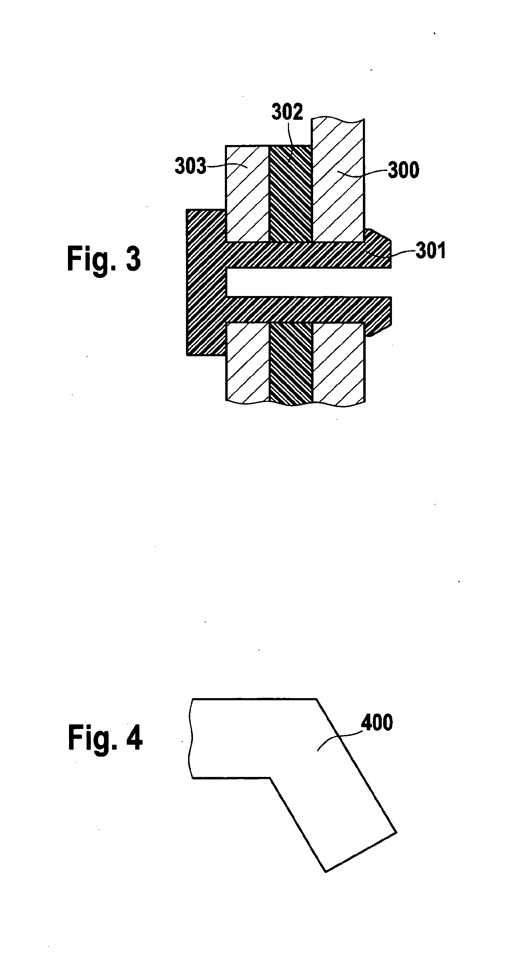

Figur 3 zeigt eine Alternative zur Schraube und zur Niete. Vorliegend ist ein Ausschnitt des Luftdrucksensors 303 dargestellt. Eine Dichtung 302 ist zwischen dem Luftdrucksensor 303 und der Wand 300. Als Verbindungselement ist vorliegend ein Clips 301 vorgesehen, der eine einfache Montage an der Wand 300 ermöglicht. Wie oben angegeben, kann auch ein Dübel oder ein anderes ähnlich geartetes Verbindungselement verwendet werden.

Figur 4 zeigt eine Alternative zur 90-Grad-Abwinkelung des Druckeinlasskanals. Vorliegend ist der Druckeinlasskanal 400 in einem anderen Winkel, vorliegend 60 Grad, abgewinkelt. Der Winkel und die Länge des abgewinkelten Teils müssen so sein, dass gegebenenfalls, wenn der Druckeinlasskanal die erfindungsgemä-βe Struktur ausbildet, ein Einhaken des Luftdrücksensors durch die Öffnung in der Fahrzeugwand ermöglicht wird.

## Patentansprüche

1. Luftdrucksensor zur Seitenaufprallsensierung mit Befestigungsmitteln für die Befestigung des Luftdrucksensors an einer Fahrzeugwand, wobei die Befestigungsmittel einen einzigen Durchbruch für eine Aufnahme eines einzigen Verbindungselements, wobei das Verbindungselement zur Befestigung des Luftdrucksensors an der Fahrzeugwand dient und wenigstens eine Struktur am Druckeinlasskanal, der durch eine Öffnung in der Fahrzeugtür geführt wird, aufweisen, wobei die wenigstens eine Struktur derart geformt ist, dass die wenigstens eine Struktur ein Einhaken des Luftdrucksensors an der Fahrzeugwand ermöglicht, **dadurch gekennzeichnet, dass** die wenigstens eine Struktur durch den Druckeinlasskanal realisiert und der Luftdrucksensor im befestigten Zustand mittels der wenigstens einen Struktur an der Fahrzeugwand eingehakt ist.

2. Luftdrucksensor nach Anspruch 1, **dadurch gekennzeichnet, dass** das Verbindungselement eine Schraube, eine Niete, ein Clips oder ein Dübel ist.

3. Luftdrucksensor nach Anspruch 1 oder 2, **dadurch gekennzeichnet, dass** der Druckeinlasskanal die wenigstens eine Struktur durch wenigstens eine Abwinkelung realisiert.

4. Luftdrucksensor nach einem der Ansprüche 1 oder 2, **dadurch gekennzeichnet, dass** am Druckeinlasskanal wenigstens ein Vorsprung als die wenigstens eine Struktur vorgesehen ist.

5. Luftdrucksensor nach einem der vorhergehenden Ansprüche, **dadurch gekennzeichnet, dass** das Verbindungselement und die wenigstens eine Struktur auf jeweils gegenüberliegenden Seiten des Luftdrucksensors in vertikaler Richtung in befestigtem Zustand des Luftdrucksensors vorgesehen sind.

6. Luftdrucksensor nach einem der vorhergehenden Ansprüche ,**dadurch gekennzeichnet, dass** das Verbindungselement derart geformt ist, dass das Verbindungselement ein elektrisches Kontaktieren des Luftdrucksensors nur im eingebauten Zustand ermöglicht.

7. Luftdrucksensor nach einem der vorhergehenden Ansprüche, **dadurch gekennzeichnet, dass** eine Dichtung, die durch die wenigstens eine Struktur beansprucht wird, oberhalb der Öffnung in der Wand in befestigtem Zustand angeordnet ist.

## Claims

1. Air pressure sensor for sensing side impacts with attachment means for attaching the air pressure sensor to a vehicle wall, wherein the attachment means have a single breakthrough for accommodating a single connecting element, wherein the connecting element serves to attach the air pressure sensor to the vehicle wall and has at least one structure at the pressure inlet duct which leads through an opening in the vehicle door, wherein the at least one structure is shaped in such a way that the at least one structure permits the air pressure sensor to be coupled to the vehicle wall, **characterized in that** the at least one structure is implemented by the pressure inlet duct, and the air pressure sensor is coupled to the vehicle wall in the attached state by means of the at least one structure.

2. Air pressure sensor according to Claim 1, **characterized in that** the connecting element is a screw, a rivet, a clip or a rawlplug.

3. Air pressure sensor according to Claim 1 or 2, **characterized in that** the pressure inlet duct realizes the at least one structure through at least one bent portion.

4. Air pressure sensor according to one of Claims 1 and 2, **characterized in that** at least one projection is provided as the at least one structure on the pressure inlet duct.

5. Air pressure sensor according to one of the preceding claims, **characterized in that** the connecting element and the at least one structure are provided on respective opposite sides of the air pressure sensor in the vertical direction in the attached state of the air pressure sensor.

6. Air pressure sensor according to one of the preceding claims, **characterized in that** the connecting element is shaped in such a way that the connecting element permits electrical contact to be made with the air pressure sensor only in the installed state.

7. Air pressure sensor according to one of the preceding claims, **characterized in that** a seal which is stressed by the at least one structure is arranged above the opening in the wall in the attached state.

## Revendications

1. Capteur d'air comprimé servant à la détection d'un choc latéral à l'aide de moyens de fixation pour la fixation du capteur d'air comprimé à une paroi de véhicule, les moyens de fixation comprenant un passage traversant unique pour loger un élément de liaison unique, l'élément de liaison servant à la fixation du capteur d'air comprimé à la paroi de véhicule ainsi qu'à la fixation d'au moins une structure au canal d'entrée de pression guidé à travers une ouverture pratiquée dans la porte du véhicule, l'au moins une structure étant formée de telle sorte que l'au moins une structure permet un accrochage du capteur d'air comprimé à la paroi de véhicule, **caractérisé en ce que** l'au moins une structure est réalisée au travers du canal d'entrée de pression et que le capteur d'air comprimé est accroché, à l'état fixé, à la paroi de véhicule à l'aide de l'au moins une structure.

2. Capteur d'air comprimé selon la revendication 1, **caractérisé en ce que** l'élément de liaison prend la forme d'une vis, d'un rivet, d'un clip ou d'un goujon.

3. Capteur d'air comprimé selon la revendication 1 ou 2, **caractérisé en ce que** le canal d'entrée de pression permet de réaliser l'au moins une structure par le biais d'au moins un coude.

4. Capteur d'air comprimé selon l'une quelconque des revendications 1 ou 2, **caractérisé en ce qu'**au moins une saillie prenant la forme de l'au moins une structure est prévue au niveau du canal d'entrée de pression.

5. Capteur d'air comprimé selon l'une quelconque des revendications précédentes, **caractérisé en ce que** l'élément de liaison et l'au moins une structure sont prévus sur les côtés respectivement opposés du capteur d'air comprimé dans la direction verticale, à l'état fixé du capteur d'air comprimé.

6. Capteur d'air comprimé selon l'une quelconque des revendications précédentes, **caractérisé en ce que** l'élément de liaison est formé de telle sorte que l'élément de liaison ne permette une mise en contact électrique du capteur d'air comprimé qu'à l'état encastré.

7. Capteur d'air comprimé selon l'une quelconque des revendications précédentes, **caractérisé en ce qu'**un joint sollicité par l'au moins une structure est disposé au-dessus de l'ouverture pratiquée dans la paroi, à l'état fixé.
